Europäisches Patentamt

European Patent Office

Office européen des brevets

(19)

(11) Veröffentlichungsnummer : **0 188 682**
**B1**

(12) **EUROPÄISCHE PATENTSCHRIFT**

(45) Veröffentlichungstag der Patentschrift :
28.06.89

(21) Anmeldenummer : 85114294.3.

(22) Anmeldetag : 09.11.85

(51) Int. Cl.⁴ : **A 01 D 34/66**

(54) **Kreiselmäher.**

(30) Priorität : 15.01.85 DE 3501123

(43) Veröffentlichungstag der Anmeldung :
30.07.86 Patentblatt 86/31

(45) Bekanntmachung des Hinweises auf die Patenterteilung : 28.06.89 Patentblatt 89/26

(84) Benannte Vertragsstaaten :
AT BE CH FR GB IT LI NL

(56) Entgegenhaltungen :
EP—A— 0 132 012
DE—A— 1 944 318
DE—A— 2 703 043
DE—U— 8 304 472
FR—A— 1 578 285
GB—A— 973 945
GB—A— 1 147 236
GB—A— 1 231 343
US—A— 3 469 376
US—A— 3 473 302

(73) Patentinhaber : GREENLAND GMBH & CO. KG
Erwin-Dietrich-Platz 1
D-7702 Gottmadingen (DE)

(72) Erfinder : Glunk, Josef
Schrotzburgstrasse 42
D-7702 Gottmadingen (DE)

(74) Vertreter : Patentanwälte Grünecker, Kinkeldey,
Stockmair & Partner
Maximilianstrasse 58
D-8000 München 22 (DE)

EP 0 188 682 B1

## Beschreibung

Die Erfindung betrifft einen Kreiselmäher für den seitlichen Anbau an einen Schlepper, bestehend aus einem Mähbalken, der an seiner Unterseite mehrere Mähtrommeln mit im wesentlichen senkrechten Rotationsachsen aufweist und an deren Unterseiten Schneidwerkzeuge befestigt sind, deren Flugkreise sich überschneiden, wobei die Mähtrommeln von der Zapfwelle des Schleppers angetrieben werden.

Aus der Europäischen Patentanmeldung 84201031.6, am 23.01.85 veröffentlicht als EP-A-0132012, ist eine Mähmaschine mit mindestens vier mit Schneidmessern versehen, im wesentlichen senkrecht drehbaren Mähorganen bekannt, wobei die benachbarten Mähorgane paarweise gegensinnig rotieren und die außen liegenden Mähorgane einen größeren Schneiddurchmesser als die inneren aufweisen.

Eine Vielzahl derartiger Kreiselmäher weist zwei gegensinnig rotierende Mähtrommeln auf, die an der Unterseite des Mähbalkens angeordnet sind. Die Ablage des Erntegutes erfolgt dabei durch den Spalt zwischen den Mähtrommeln, wobei das Mähgut in Form eines Schwades hinter der Mähmaschine in der Mitte der gesamten Mähbreite abgelegt wird. Ein Nachteil dieser herkömmlichen Kreiselmäher ist darin zu sehen, daß bei den diese Kreiselmäher tragenden Schleppern üblicherweise Spurbreiten vorhanden sind, die bedingen, daß während des Mähens ein zuvor von dem Kreiselmäher abgelegter Schwad von den Rädern des Schleppers anschließend überfahren wird.

Um diesen Nachteil zu vermeiden, ist es aus der DE-A-27 03 043 bekannt, bei einem Kreiselmäher mit zwei rotierenden Mähtrommeln den Schneidkreisdurchmesser der außen liegenden Mähtrommel größer auszubilden als denjenigen der innen liegenden Mähtrommel, wodurch die Mähbreite so weit vergrößert wird, daß herkömmliche Schlepper mit den überwiegend verwendeten Spurabständen den zuvor abgelegten Schwad nicht mehr überfahren können.

Mit diesem bekannten Kreiselmäher erfolgt also eine Verbreiterung des ausgeräumten Streifens, d. h. eine Vergrösserung der Mähbreite, die der Hälfte des Unterschiedes zwischen den beiden Mähtrommeldurchmessern entspricht und die verglichen zur gesamten Mähbreite des Kreiselmähers als geringfügig anzusehen ist.

Der Erfindung liegt die Aufgabe zugrunde, einen Kreiselmäher der eingangs näher genannten Art dahingehend zu verbessern, daß die Mähbreite erheblich größer als bei den bekannten Kreiselmähern ist unter Beibehaltung nur eines einzigen vom Kreiselmäher abzulegenden Schwads.

Ausgehend von einem Kreiselmäher der eingangs näher genannten Art wird zur Lösung dieser Aufgabe vorgeschlagen, daß am Mähbalken mindestens drei Mähtrommeln angeordnet sind, mit unterschiedlichen Flugkreisen der Schneidwerkzeugen, wobei die beiden dem Schlepper nächst liegenden Mähtrommeln die gleiche Drehrichtung aufweisen und die übrige bzw. übrigen Mähtrommeln eine dazu gegensinnige Drehrichtung aufweist bzw. aufweisen.

Gemäß einem ersten bevorzugten Ausführungsbeispiel sind am Mähbalken drei Mähtrommeln angeordnet, mit drei unterschiedlich großen Flugkreisen der Schneidwerkzeuge, wobei die beiden dem Schlepper nächstliegenden Mähtrommeln gleiche Drehrichtung aufweisen und die dritte Mähtrommel eine dazu gegensinnige Drehrichtung aufweist.

Gemäß einem zweiten bevorzugten Ausführungsbeispiel sind am Mähbalken drei Mähtrommeln angeordnet, von denen die dem Schlepper nächstliegende Mähtrommel einen kleineren Flugkreis der Schneidwerkzeuge aufweist und die beiden anderen Mähtrommeln gleich große Flugkreise der Schneidwerkzeuge aufweisen, wobei die beiden dem Schlepper nächstliegenden Mähtrommeln die gleiche Drehrichtung aufweisen und die dritte Mähtrommel eine dazu gegensinnige Drehrichtung aufweist.

Gemäß einem dritten bevorzugten Ausführungsbeispiel sind am Mähbalken vier Mähtrommeln angeordnet, von denen die beiden äußeren Mähtrommeln einen kleineren Flugkreis der Schneidwerkzeuge als die beiden dazwischen liegenden inneren Mähtrommeln aufweisen, wobei die dem Schlepper nächstliegende Mähtrommel die gleiche Drehrichtung wie die ihr benachbarte Mähtrommel mit größerem Flugkreis der Schneidwerkzeuge aufweist und die beiden anderen Mähtrommeln eine dazu entgegengesetzte Drehrichtung aufweisen.

Bei einem weiteren bevorzugten Ausführungsbeispiel ist mindestens eine der äußeren Mähtrommeln kleineren Flugkreises der Schneidwerkzeuge in Arbeitsrichtung des Kreiselmähers gesehen vor der durch die Drehachsen der übrigen Mähtrommeln verlaufenden Ebene angeordnet.

Ferner kann es besonders günstig sein, daß mittig hinter zwei benachbarten Mähtrommeln entgegengesetzter Drehrichtung eine Konditioniereinrichtung zum Aufbereiten des Mähgutes vorgesehen ist.

Wie bei herkömmlichen Kreiselmähern üblich, erfolgt die Schwadablage zwischen zwei benachbarten sich gegensinnig drehenden Mähtrommeln. Durch die erfindungsgemäße Zuordnung von einer oder zwei zusätzlicher Mähtrommeln mit einem unterschiedlichen Durchmesser erfolgt nicht nur eine erhebliche Verbreiterung des ausgeräumten Streifens, d. h. der Mähbreite, sondern auch aufgrund derselben Drehrichtung wie die ihr benachbarte Mähtrommel eine leichtere Übergabe des gemähten Futters von der Mähtrommel kleineren Durchmessers an die daneben sich gleichsinnig drehende Mähtrommel größeren Durchmessers, da sowohl der Transportweg als auch die transportierte Futtermenge kleiner ist als bei zwei gleich großen Mähtrommeln. Die Übergabe des Futters wird dadurch leichter und sicherer. Wird ferner die zusätzliche im Durchmesser kleinere Mähtrommel in Arbeitsrichtung der Maschine gesehen nach vorne verlegt, so ist eine noch bessere Übergabe an die daneben liegende größere Mähtrommel gewährleistet. Da die Mähgutabgabe, d. h. die Schwadbildung zwischen den beiden sich gegensinnig drehenden Mähtrommeln großen Flugkreises erfolgt, ist für eine anschließende Aufbereitung des Mähgutes nach dem Mähvorgang nur ein relativ schmales Konditioniergerät erforderlich.

Da ferner die Mähtrommeln etwa gleiche Umfangsgeschwindigkeiten und demzufolge unterschiedliche Drehzahlen aufweisen, wird eine unterschiedliche Anzahl von Schneidwerkzeugen pro Mähtrommel verwendet. Ferner ist es auch möglich, bei gleicher Anzahl von Schneidwerkzeugen die Drehzahl der Mähtrommeln zu verändern.

Im folgenden wird die Erfindung anhand der Zeichnung näher erläutert, in der vorteilhafte Ausführungsbeispiele dargestellt sind ; es zeigen :

Figur 1 eine Draufsicht auf einen Kreiselmäher mit drei Mähtrommeln unterschiedlichen Flugkreises der Schneidwerkzeuge ;

Figur 2 ein zweites Ausführungsbeispiel eines Kreiselmähers mit drei Mähtrommeln und

Figur 3 eine Draufsicht auf einen Kreiselmäher mit vier Mähtrommeln.

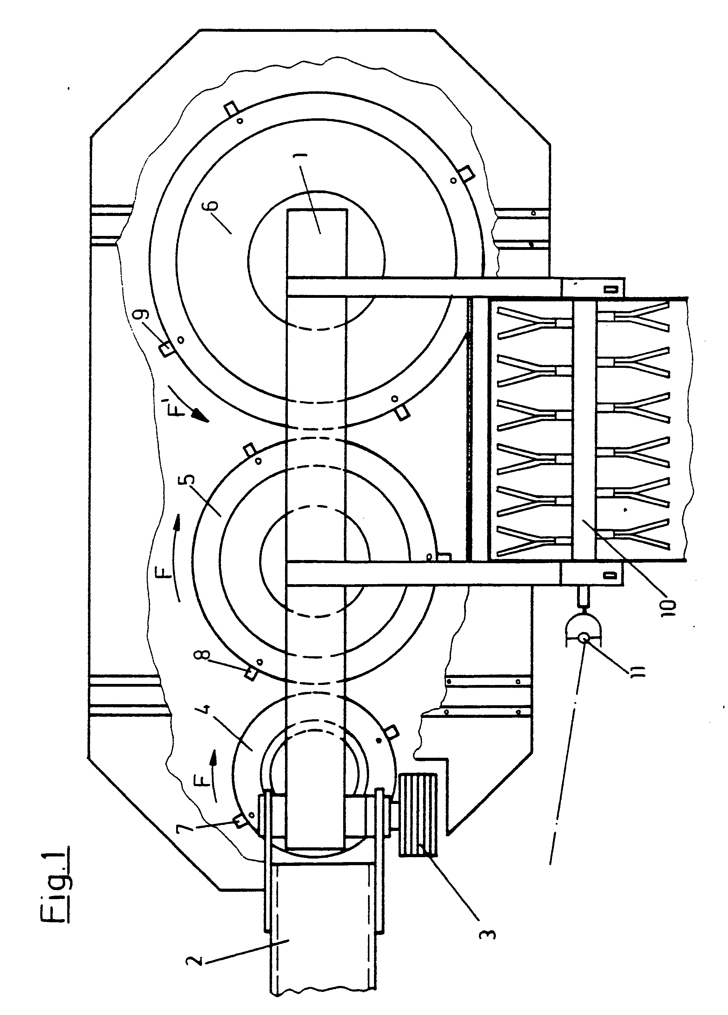

Bei dem in Figur 1 dargestellten schematischen Kreiselmäher bedeutet 1 einen quer zur Arbeitsrichtung der Maschine verlaufenden Mähbalken, der über eine nicht näher dargestellte Aufhängevorrichtung 2 mit einem Schlepper verbunden werden kann. Unterhalb des Mähbalkens 1 sind mehrere Mähtrommeln 4, 5, 6 angeordnet mit im wesentlichen senkrechter Rotationsachse, wobei diese Mähtrommeln über einen geeigneten Antrieb 3 in Rotationen versetzt werden. An der Unterseite der Mähtrommeln sind Schneidwerkzeuge 7, 8, 9 vorgesehen, wobei sich die von ihnen beschriebenen Flugkreise zwischen je zwei benachbarten Mähtrommeln überschneiden.

Die Schneidwerkzeuge 7, 8, 9 sind z. B. Messerklingen, die drehbar an den äußeren Enden von Ringkragen gelagert sind.

Wie aus Figur 1 ersichtlich, sind die Durchmesser der von den Schneidwerkzeugen 7, 8, 9 beschriebenen Flugkreise unterschiedlich groß, wobei die dem Schlepper nächstliegende Mähtrommel 4 den kleinsten Flugkreisdurchmesser aufweist, die mittlere Mähtrommel 5 einen größeren und die außen liegende Mähtrommel 6 einen noch größeren Flugkreisdurchmesser aufweist. Die dem Schlepper nächstliegende Mähtrommel 4 und die daneben liegende mittlere Mähtrommel 5 weisen die gleiche Drehrichtung auf, wie es durch den Pfeil F angedeutet ist. Die äußere Mähtrommel 6 weist eine dazu gegensinnige Drehrichtung auf, wie es durch den Pfeil F' angedeutet ist. Dadurch erfolgt die Schwadablage zwischen den beiden Mähtrommeln 5, 6, während das von der dem Schlepper nächstliegenden Mähtrommel 4 gemähte Gut der daneben liegenden Mähtrommel 5 zugeführt wird.

An der Stelle der Schwadausbildung zwischen den Mähtrommeln 5, 6 ist hinter den beiden Trommeln eine relativ schmale Konditioniereinrichtung 10 angeordnet, die durch einen geeigneten Antrieb 11 vom Schlepper in Drehung versetzt wird und das Futter aufbereitet.

Da die erste Mähtrommel 4 einen kleineren Durchmesser aufweist als die daneben liegende Mähtrommel 5, ist sowohl der Transportweg als auch die transportierte Futtermenge kleiner als es bei zwei gleich großen Mähtrommeln der Fall wäre. Hierdurch ist die Übergabe von der Mähtrommel 4 an die Mähtrommel 5 leichter und sicherer. Wird zusätzlich noch die dem Schlepper nächstliegende Mähtrommel 4 kleineren Durchmessers in Arbeitsrichtung der Maschine gesehen, nach vorne verlegt, so erhält man einen noch bessere Übergabe an die daneben liegende größere Mähtrommel 5.

Weisen die Mähtrommeln etwa gleiche Umfangsgeschwindigkeiten und demzufolge unterschiedliche Drehzahlen auf, so ist die Anzahl der Schneidwerkzeuge pro Mähtrommel an diese Drehzahl anzupassen bzw. die Drehzahl und der Durchmesser der Mähtrommeln an die Anzahl der Schneidwerkzeuge anzupassen. Bei dem in Figur 1 dargestellten Ausführungsbeispiel kann z. B. die Mähtrommel 4 kleinsten Durchmessers nur zwei Schneidwerkzeuge aufweisen, die nächst grössere Mähtrommel 5 drei Schneidwerkzeuge und die Mähtrommel mit dem größten Durchmesser 6 vier Schneidwerkzeuge aufweisen.

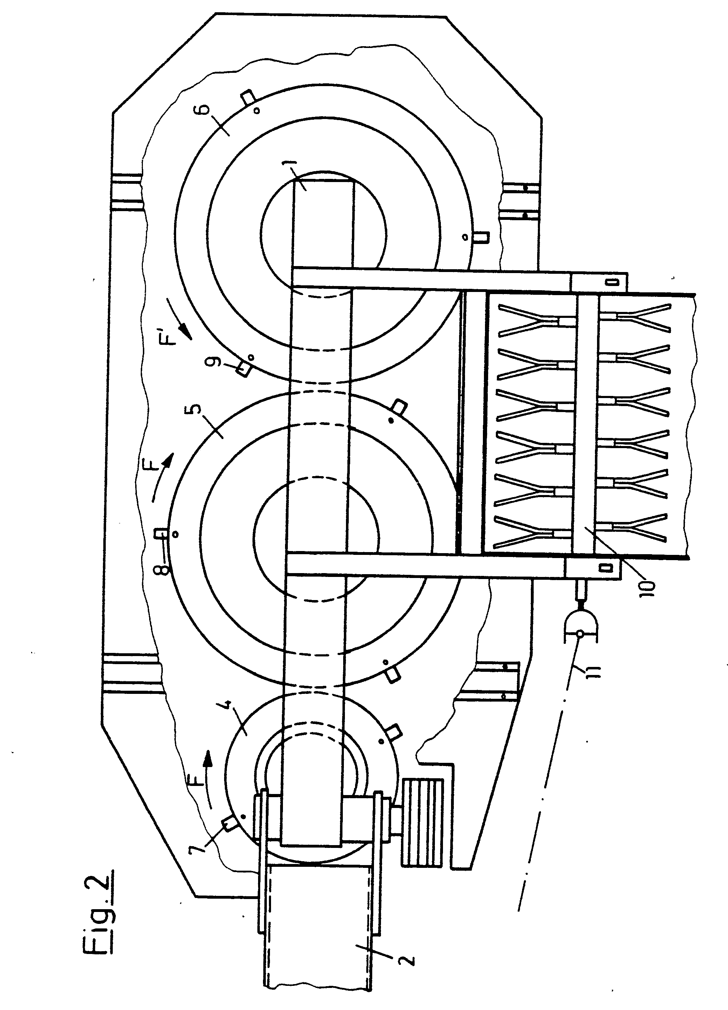

Bei dem in Figur 2 dargestellten Ausführungsbeispiel, bei dem gleiche Teile mit gleichen Bezugszeichen versehen sind, sind ebenfalls drei Mähtrommeln an der Unterseite des Mähbalkens 1 angeordnet, wobei jedoch die mittlere Mähtrommel 5 und die äußere Mähtrommel 6 gleichen Durchmesser aufweisen, während die dem Schlepper nächstliegende Mähtrommel 4 einen dazu kleineren Durchmesser aufweist. Dies bedeutet auch, daß der Flugkreis der Schneidwerkzeuge der Trommel 4 einen kleineren Durchmesser aufweist als diejenigen der beiden übrigen Mähtrommeln 5, 6. Auch hier ist die Drehrichtung der Mähtrommel 4 gleichsinnig zu derjenigen der Mähtrommel 5, jedoch die Drehrichtung der Mähtrommel 6 entgegengesetzt zu derjenigen der Mähtrommel 5, so daß auch hier die Schwadablage zwischen den beiden gleich großen Mähtrommeln 5, 6 erfolgt und das Futter auch an dieser Stelle durch eine Konditioniereinrichtung 10 aufbereitet werden kann.

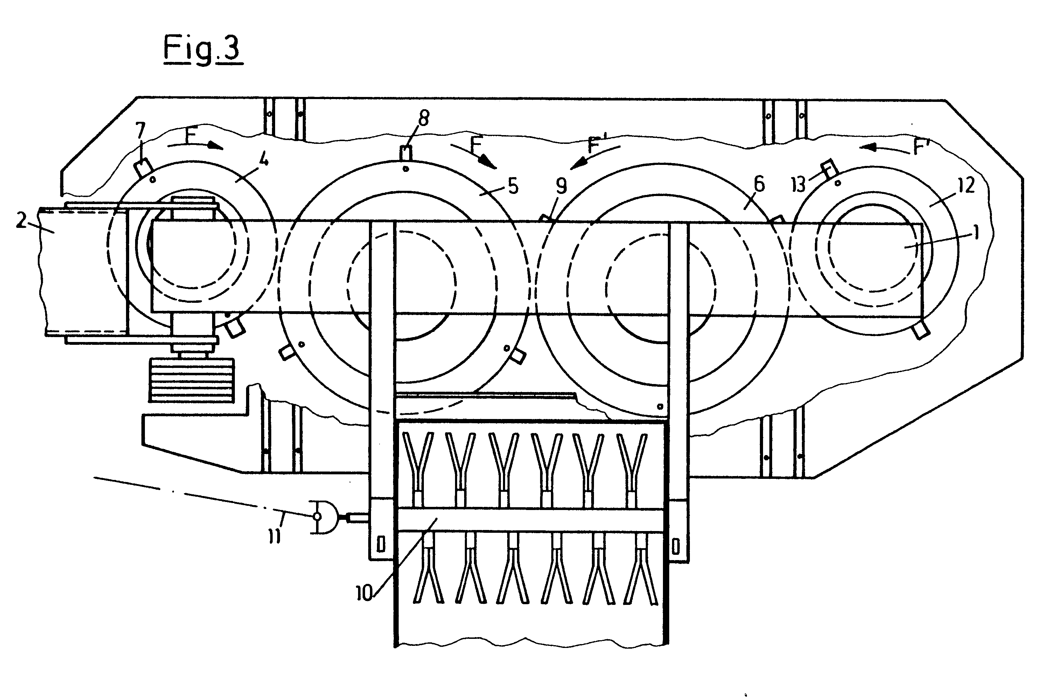

Bei dem in Figur 3 dargestellten Ausführungsbeispiel sind am Mähbalken 1 vier Mähtrommeln angeordnet, wobei die beiden mittleren Mähtrommeln einen gleichen Durchmesser und damit einen gleichen Flugkreisdurchmesser ihrer Schneidwerkzeuge 8, 9 aufweisen, während noch zwei zusätzliche Mähtrommeln 4, 12 kleineren Flugkreisdurchmessers ihrer Schneidwerkzeuge 7, 13 vorgesehen sind. Die dem Schlepper nächstliegenden Mähtrommel 4 weist dabei die gleiche Drehrichtung wie die daneben liegende größere Mähtrommel 5 auf (F), während die beiden anderen Mähtrommeln 6, 12 dazu entgegengesetzte Drehrichtungen (F') aufweisen. Zusätzlich sind bei diesem Ausführungsbeispiel noch die beiden Mähtrommeln kleineren Durchmessers 4, 12 in Arbeitsrichtung des Kreiselmähers gesehen nach vorne versetzt, so daß ihre Achsen vor derjenigen Ebene liegen, welche die beiden Achsen der mittleren Mähtrommeln 5, 6 verbindet. Dadurch wird eine problemlose und leichte Übergabe des Futters von den beiden zusätzlichen Mähtrommeln 4, 12 an die beiden daneben liegenden Mähtrommeln 5, 6 bewirkt, zwischen denen der Schwad abgelegt wird.

Mit dem erfindungsgemäßen Kreiselmäher erzielt man einen einzigen Schwad bei gleichzeitiger erhöhter Arbeitsbreite, ohne daß irgendwelche Verstopfungen auftreten.

## Patentansprüche

1. Kreiselmäher für den seitlichen Anbau an einem Schlepper, bestehend aus einem Mähbalken, der mehrere Mähtrommeln (4, 5, 6, 12) mit im wesentlichen senkrechten Rotationsachsen aufweist, an deren Unterseite Schneidwerkzeuge (7, 8, 9, 13) befestigt sind, deren Flugkreisdurchmesser sich überschneiden und unterschiedlich groß sind, dadurch gekennzeichnet, daß am Mähbalken (1) mindestens drei Mähtrommeln (4, 5 und 6 bzw. 6 und 12) angeordnet sind, wobei die beiden dem Schlepper nächst liegenden Mähtrommeln (4, 5) die gleiche Drehrichtung (F) aufweisen und die übrige(n) Mähtrommel(n) (6 bzw. 6 und 12) eine dazu gegensinnige Drehrichtung (F') aufweist bzw. aufweisen.

2. Kreiselmäher nach Anspruch 1, dadurch gekennzeichnet, daß am Mähbalken (1) drei Mähtrommeln (4, 5, 6) angeordnet sind, von denen die dem Schlepper nächstliegende Mähtrommel (4) einen kleineren Flugkreisdurchmesser der Schneidwerkzeuge (7) aufweist und die beiden anderen Mähtrommeln (5, 6) einen gleich großen Flugkreisdurchmesser der Schneidwerkzeuge (8, 9) aufweisen.

3. Kreiselmäher nach Anspruch 1, dadurch gekennzeichnet, daß am Mähbalken (1) vier Mähtrommeln (4, 5, 6, 12) angeordnet sind, von denen die dem Schlepper nächstliegende und die dem Schlepper abgewandt liegende Mähtrommel (4 bzw. 12) einen kleineren Flugkreisdurchmesser der Schneidwerkzeuge (7, 13) aufweisen.

4. Kreiselmäher nach Anspruch 3, dadurch gekennzeichnet, daß mindestens eine der Mähtrommeln (4, 12) kleineren Flugkreisdurchmessers der Schneidwerkzeuge (7, 13) in Arbeitsrichtung des Kreiselmähers gesehen vor der durch die Drehachsen der übrigen Mähtrommel, (5, 6) verlaufende Ebene angeordnet ist.

## Claims

1. A rotary mower for lateral attachment to a tractor, comprising a mower bar having a plurality of mowing cylinders (4, 5, 6, 12) with substantially perpendicular axes of rotation, on the undersides of wich mowing cylinders are secured cutting tools (7, 8, 9, 13) whose orbit diameters intersect one another and are of different sizes, characterised in that at least three mowing cylinders (4, 5 and 6 or 6 and 12) are disposed on the mower bar (1), wherein the two mowing cylinders (4, 5) located nearest to the tractor have the same direction of rotation (F), and the other mowing cylinder(s) (6 or 6 and 12) rotate in the opposite direction (F') thereto.

2. A rotary mower as claimed in claim 1, characterised in that three mowing cylinders (4, 5, 6) are disposed on the mower bar (1), the orbit of the cutting tools (7) of the mowing cylinder (4) located nearest to the tractor being of smaller diameter, and the orbits of the cutting tools (8, 9) of the other two mowing cylinders (5, 6) being of equal diameter.

3. A rotary mower as claimed in claim 1, characterised in that four mowing cylinder (4, 5, 6, 12) are disposed on the mower bar (1), wherein the orbits of the cutting tools (7, 13) of the respective mowing cylinders (4 and 12) located nearest to and furthest from the tractor have a smaller diameter.

4. A rotary mower as claimed in claim 3, characterised in that at least one of the mowing cylinders (4, 12) whose cutting tools (7, 13) have the smaller diameter orbit is disposed in front of the plane extending through the axes of rotation of the other mowing cylinders (5, 6), as viewed in the working direction of the rotary mower.

## Revendications

1. Faucheuse rotative à rapporter latéralement à un tracteur, se composant d'une barre de coupe qui présente plusieurs tambours de coupe (4, 5, 6, 12) avec des axes essentiellement perpendiculaires de rotation, au-dessous desquels sont fixés des outils de coupe (7, 8, 9, 13), dont les diamètres du cercle de vol se coupent et sont de grandeurs différentes, caractérisée en ce que sur la barre de coupe (1) sont disposés au moins trois tambours de coupe (4, 5 et 6 ou respectivement 6 et 12), les deux tambours de coupe (4, 5) se trouvant le plus près du tracteur présentant le même sens de rotation (F) et le ou les tambours de coupe restants (6 ou respectivement 6 et 12) présentant un sens de rotation (F') opposé.

2. Faucheuse rotative selon la revendication 1, caractérisée en ce que sur la barre de coupe (1) sont disposés trois tambours de coupe (4, 5, 6) dont le tambour de coupe (4) le plus proche du tracteur présente un plus petit diamètre de cercle de vol des outils de coupe (7) et les deux autres tambours de coupe (5, 6) présentent un même diamètre de cercle de vol des outils de coupe (8, 9).

3. Faucheuse rotative selon la revendication 1, caractérisée en ce que sur la barre de coupe (1) sont disposés quatre tambours de coupe (4, 5, 6, 12), dont celui qui est le plus proche du tracteur et celui qui est éloigné du tracteur (4 ou respectivement 12) présentent un plus petit diamètre du cercle de vol des outils de coupe (7, 13).

4. Faucheuse rotative selon la revendication 3, caractérisée en ce qu'au moins l'un des tambours de coupe (4, 12) d'un plus petit diamètre de cercle de vol des outils de coupe (7, 13) est disposé, en regardant en direction de travail de la faucheuse rotative, devant le plan passant par les axes de rotation des autres tambours de coupe (5, 6).

Fig.1

Fig. 2

EP 0 188 682 B1

Fig.3